# EUROPEAN PATENT APPLICATION

(11) **EP 4 582 336 A1**
(43) Date of publication of application: **09.07.2025**
(21) Application number: 25150619.2
(22) Date of filing: 08.01.2025
(51) Int. Cl.: B62K 5/08, B62K 7/00, B62K 17/00

(54) **MULTI-SEAT PEDAL VEHICLE**

(30) Priority: 08.01.2024 IT 202400000207
(71) Applicant: BusItaly Srl, 62020 Colmurano (MC) (IT)
(72) Inventor: STRAFFI, MICHELE, 62020 GUALDO (MC) (IT)
(74) Representative: Busca, Andrea

(57) **Abstract**

The present invention concerns a multi-seat pedal vehicle characterized by the fact that it comprises:
- at least four idler wheels (10), all of which are steerable
at least one driving wheel (15);
- a plurality of pedaling stations (20) supported by the supporting frame (5) each comprising a seat (21) and a pair of pedals (22), each connected to the driving wheel (15) by transmission means (14).
- steering control means (25).

## Description

The present invention concerns a multi-seat pedal vehicle, hereafter referred to only as "vehicle" for simplicity. "Multi-seat" means a vehicle that comprises a plurality of seats, each capable of accommodating one person.

The invention does not exclude vehicles comprising means of traction in addition to the pedal-powered vehicle, such as means incorporating at least one motor.

### PRIOR ART

In the multi-seat pedal vehicle sector, quadricycles, also improperly called rickshaws, are well known and are very popular in tourist areas where an entire family or group of friends can rent one for short excursions.

Known quadricycles, however, suffer from a number of problems, among which is mainly the fact that they have poor maneuverability. When one considers that they are often used in crowded areas, and along narrow paths of the city walkway, this appears to be a major limitation that can turn a nice trip into a stressful experience.

Maneuverability, for example, is affected by the steering diameter, which is too large for these vehicles, and the risk of rollover in curves.

The situation is particularly worsened by the well-established practice of equipping rickshaws with an electric motor in addition to the pedals, which is capable of increasing the speed and power of the vehicle, making it even more unmanageable.

The purpose of the present invention is to solve part or all the problems of the prior art.

A preferred purpose of the present invention is to increase maneuverability of a multi-seat pedal vehicle.

Another preferred purpose of the present invention is to increase the safety of the vehicle.

Another additional preferred purpose of the present invention is to best combine vehicle maneuverability and safety with an auxiliary engine in addition to pedal traction.

Another further preferred purpose is to provide a pedal vehicle equipped with an auxiliary motor configured to provide both a forward and reverse motion, where reversing is safe for users.

Another further preferred purpose of the present invention is to provide an alternative vehicle to known rickshaws.

Another further purpose of the present invention is to provide vehicle a which is easy and cheap to produce.

Another further purpose of the present invention is to solve said problem using an easy and cheap geometry to implement.

Another further purpose of the present invention is to solve said problem by means of a geometry that maintains traditional reciprocating piston operation.

### GENERAL INTRODUCTION

Technical problems are solved by a multi-post pedal vehicle as indicated in the attached claims.

### DETAILED DESCRIPTION

Further characteristics and advantages of the present invention will best seen from the following detailed description of its preferred forms of implementation, made with reference to the attached drawings and given for illustrative and non-limiting purposes. In such drawings:
- figure 1 shows a schematic in plan view of the traction system of a multi-seat pedal vehicle according to the present invention;
- figure 2 shows a schematic of the vehicle steering system from figure 1, where the wheels are shown in a left steering configuration;
- figure 3 is like figure 2, where the wheels are shown in various possible configurations;
- figure 4 shows a pedal traction disengagement system according to the present invention.

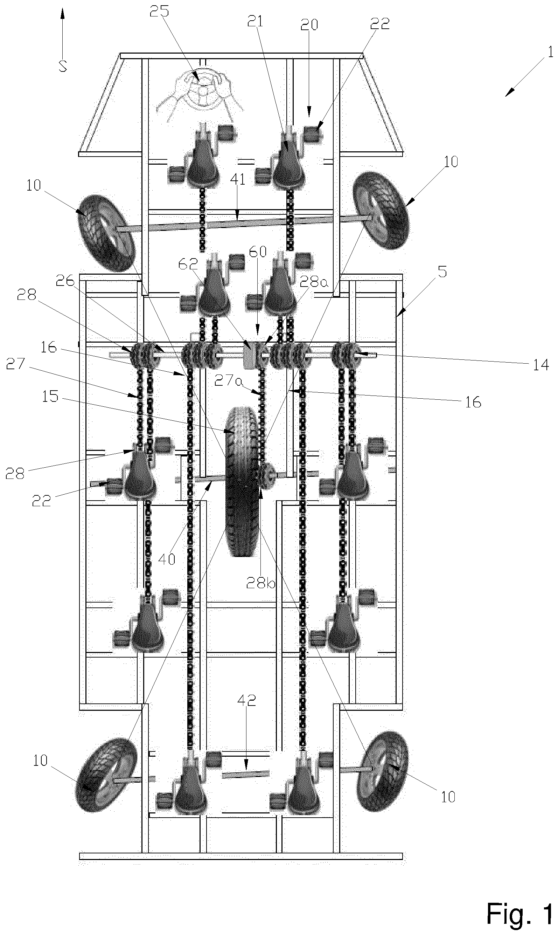

Figure 1 shows schematically a multi-seat pedal vehicle, hereafter called for simplicity "vehicle," and indicated as a whole by reference number 1.

Vehicle 1 comprises:
- at least one structural frame 5
- at least four idler wheels 10 placed to support the frame 5, all steerable;
- at least one driving wheel 15 independent of the steering wheels
- a plurality of pedaling stations 20 supported by the supporting frame 5, each comprising a seat 21 and a pair of pedals 22, each connected to the driving wheel 15 by power transmission means 14,
- means of steering control 25, such as a steering wheel or handlebars.

The vehicle possesses a straight forward direction S and a capacity to steer with respect to it due to said steerable wheels 10.

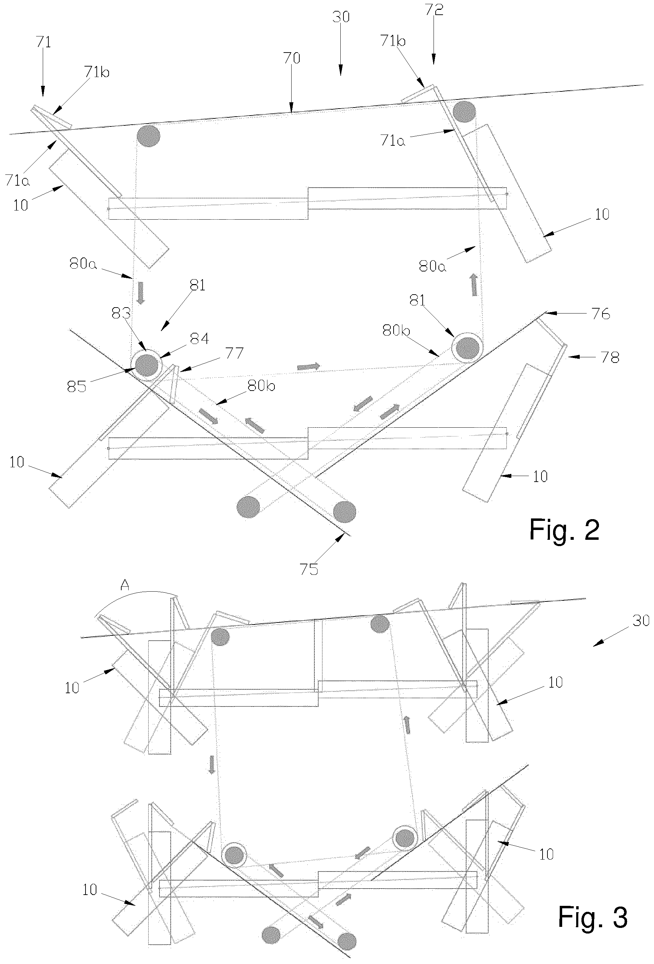

The steering wheels 10 are arranged to form the vertices of a quadrilateral in such a way to define, with respect to a forward direction of the vehicle, a pair of front wheels, and a pair of rear wheels, where all said steering wheels are linked together by a transmission system 30 of the steering control (best seen in figure 2), also called hereafter simply the steering system, to steer all of them simultaneously.

The driving wheel 15 is arranged within the quadrilateral of which the steering wheels 10 constitute the vertices, e.g. it is arranged in its center.

Specifically, considering the center of rotation of each wheel as a vertex of said quadrilateral, connecting those of front and rear wheels on opposite sides of the vehicle so as to form diagonals 16 of said quadrilateral, the center of rotation of the driving wheel is basically located at their intersection point.

There are variants, not illustrated, in which vehicle 1 comprises a plurality of driving wheels, having their centers of rotation aligned on a central ideal line 40 parallel to front and rear ideal lines 41 and 42 defined by the ideal lines that intersect the centers of rotation of front idler wheels 10 and rear idler wheels 10, respectively.

Of course, in any form of implementation and variation the axis of rotation of the drive wheel (s) is orthogonal to the forward direction S, so the line 40, if any, is an alignment line, not necessarily an axis of rotation.

Preferably the ideal lines 40, 41 and 42 are oblique to the forward direction S, that is, with an inclination other than 90°, in which case clearly said quadrilateral whose vertices coincide with the centers of rotation of idler wheels 10 has angles bigger and smaller than 90°. In this case line 40 is not an axis of rotation.

According to some non-illustrated variants said quadrilateral has right angles instead, so in that case said lines 40, 41 and 42 are orthogonal to the forward direction S. In this case line 40 can be an axis of rotation.

Said means of power transmission 14 include a drive shaft 26 orthogonal to the direction of travel, configured to receive motion from all pairs of pedals and to transmit it to the drive wheel 15.

Each pair of pedals 22 is connected to said drive shaft 26 to put it into rotation using a chain 27 and associated sprockets 28, where a freewheel device (not visible) is interposed between each pair of pedals and said shaft, configured to allow transmission of motion from the pedals to the shaft only in one direction of pedal rotation and to release them from each other in the other. Such systems may be of known types so they are not further described and illustrated.

In this way advantageously each passenger of the vehicle can pedal or not pedal independently of the others and not be hit by the pedals in case they want to stop pedaling.

To transmit motion to the drive wheel 15m preferably, the drive shaft 26 comprises at least one sprocket 28a connected, for example by a chain 27a, to at least one corresponding sprocket 28b integral with the drive wheel 15.

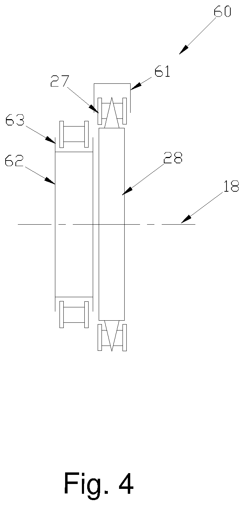

Vehicle 1 may be equipped with a motor, preferably an electric motor, connected to at least one drive wheel 15 that is preferably switchable on and off on command. Preferably said motor is configured to activate said drive wheel both forward and reverse. In this case, there is a disengagement system 60 of said shaft 26 from said drive wheel 15, best seen in the diagram in figure 4. This advantageously prevents rotation of the pedals during reverse.

For example, the disengagement system 60 includes a shifting device 61 that, for example, moves each chain 27a from engagement with the at least one sprocket 28a or 28b to engagement with a smooth pulley 62, coaxial with said sprocket, comprising a groove 63 within which the chain is free to slide without transmitting any motion.

Advantageously, this form of implementation comprises only one disengagement device 60 to disengage all pedals from all driving wheels simultaneously, however, variants in which each pedaling station has its own disengagement device 60 are not excluded.

Referring now to figures 2 and 3, in the case where said quadrilateral whose vertices are defined by the centers of rotation of the steering wheels 10 is not rectangular, the steering wheels 10 on the right side of said quadrilateral, with respect to the forward direction of the vehicle, steer a different angle than the corresponding wheels on the left side.

For example, the wheels on one of the two sides that are closer together (those on the left side in the figure) steer at a bigger angle than those on the opposite side (the right side), which are farther apart than the former.

Steering angle can be defined as, for example, the angle A between the position of the wheels in the straight forward direction of the vehicle, and their position in steering.

This result can be achieved, for example, by the following construction.

The steering system (30) comprises a first rack 70 that receives translatory motion via the steering control means 25, such as from a steering wheel or handlebars in a known manner. The first rack 70 is joined to the front or rear pair of wheels 10 by respective articulated arms 71 and 72 of different overall lengths, through which it moves them to change their inclination with respect to the forward direction. Specifically, each articulated arm 71, 72 comprises at least two consecutive elements 71a, 71b, 72a, 72b articulated together, where the length of at least one of said elements of one of the arms is greater than the length of the corresponding element of the other arm.

The ratio of the lengths of the other two elements is, preferably, opposite.

Steering wheels 10 of the other pair are controlled in steering by a respective second and third rack 75 and 76, to which they are connected by respective articulated arms 77 and 78 of different overall lengths, where if the longer articulated arm of the front wheel pair is the left one then the longer articulated arm of the rear wheel pair is the right one, and vice versa.

The construction of articulated arms 77 and 78 includes at least two consecutive elements 77a, 77b, 78a, 78b for each, where the relative proportions between the left and right arms are opposite to the left and right arms of arms 71 and 72 of the other pair of steering wheels 10.

The first rack 70 preferably has a linear translation motion of a different extent from the other two racks 76 and 77.

For example, the racks are connected to transmit steering motion to each other. Specifically, the connection is through a series of chains 80 and reduction means 81 that can reduce the translation of one rack relative to another. For example, it is possible to use between two racks two chains 80a and 80b in succession to each other and connected by a sprocket pack 83, comprising a first sprocket 84 engaged to one chain and a second sprocket 85 engaged to the other, where the two sprockets are of different diameters to each other.

Each chain preferably forms a ring around at least two sprockets, one of which belongs to one of the reduction means 81.

Advantageously, it is possible to configure the steering angles to the point of allowing the vehicle to turn on itself. For example, at least one of the steering wheels can have a steering angle A bigger than or equal to 45°.

Traction wheel 15, because of its particular position, does not oppose steering.

### GENERAL MEANING OF TERMS

In understanding the purpose of the present invention, the term "comprising" and its derivatives, as used herein, are intended as open-ended terms specifying the presence of the declared characteristics, elements, components, groups, integers and/or phases, but not excluding the presence of other undeclared characteristics, elements, components, groups, integers and/or phases. The above also applies to words with similar meanings such as the terms "including", "having" and their derivatives. In addition, the terms "part", "section", "portion", "member" or "element" when used in the singular may have the dual meaning of a single part or a plurality of parts. As used herein to describe the form(s) of implementation mentioned above, the following directional terms "forward", "backward", "above", "below", "vertical", "horizontal", "underneath" and "transverse", as well as any other similar directional terms refer to the form of implementation described in the operative position. Finally, grade terms such as "substantially", "about" and "approximately" as used herein mean a reasonable amount of deviation of the modified term such that the end result is not significantly changed.

While only selected implementation forms have been chosen to illustrate the present invention, from this description it will be clear to those expert in the field that various modifications and variations may be made without departing from the purpose of the invention as defined in the attached claims. For example, the size, shape, position or orientation of the various components may be modified as needed and/or desired. Components shown directly connected or in contact with each other may have intermediate structures interposed between them. The functions of one element can be performed by two and vice versa. The structures and functions of one form of implementation can be adopted in another one. It is not necessary that all advantages are present in a particular form of implementation at the same time. Each characteristic that is original compared to the prior art, alone or in combination with other characteristics, should also be considered a separate description of further inventions by the applicant, including structural and/or functional concepts incorporated by those characteristics. Therefore, the previous descriptions of implementation forms according to the present invention are provided for illustrative purposes only and not for the purpose of limiting the invention as defined by the attached claims and their equivalents.

## Claims

1. Multi-seat pedal vehicle **characterized by** the fact that it comprises:
- at least four idler wheels (10), all of which are steerable,
- at least one driving wheel (15),
- a plurality of pedaling stations (20) supported by the supporting frame (5) each comprising a seat (21) and a pair of pedals (22), each connected to the driving wheel (15) by transmission means (14),
- steering control means (25).

2. Vehicle according to claim 1, **characterized by** the fact that the at least four steering wheels 10 are arranged to define the vertices of an ideal quadrilateral in such a way to define, with respect to a forward direction of the vehicle, a pair of front wheels, and a pair of rear wheels, where all said steering wheels are connected by a steering system (30) to steer all at the same time, where the at least one driving wheel (15) is arranged within the quadrilateral.

3. Vehicle according to claim 2, **characterized by** the fact that, with reference to a forward direction (S) of the vehicle, it comprises a plurality of driving wheels (15), having their centers of rotation aligned on a central ideal line (40) parallel to front and rear ideal lines (41, 42) defined by the ideal lines that intersect the centers of rotation of the front idler wheels (10) and rear idler wheels (10) of said quadrilateral, respectively.

4. Vehicle according to claim 2 or 3, **characterized by** the fact that said quadrilateral has angles bigger and smaller than 90°.

5. Vehicle according to any of the previous claims **characterized by** the fact that said transmission means (14) comprise a drive shaft (26) configured to transmit a rotary motion to the traction wheel (15), wherein each pair of pedals 22 is connected to said drive shaft (26) to put it into rotation by a chain (27) and sprockets thereof (28), where between each pair of pedals and said shaft is interposed a freewheeling device configured to allow the transmission of motion from the pedals to the shaft only in one direction of pedal rotation and to release them mutually in the other.

6. Vehicle according to claim 4 or a dependent thereof, **characterized by** the fact that the steering wheels (10) on the right side of said quadrilateral, with respect to the forward direction of the vehicle, steer at a different angle than the corresponding wheels on the left side.

7. Vehicle according to claim 6, **characterized by** the fact that the steering system (30) comprises a first rack (70) joined to the front or rear wheel pair (10) by respective articulated arms (71, 72) of different overall lengths, and where the steering wheels (10) of the other pair are controlled in steering by a respective second and third rack (75, 76), to which they are connected by respective articulated arms (77, 78) of different overall lengths.

8. Vehicle according to claim 7, **characterized by** the fact that if the longest articulated arm of the front wheel pair is the left one then the longest articulated arm of the rear wheel pair is the right one, and vice versa.

9. Vehicle according to claim 7 or 8, **characterized by** the fact that each articulated arm (71, 72) of the first pair of wheels comprises at least two consecutive elements (71a, 71b, 72a, 72b) articulated to each other, where the length of at least one of said elements of one of the arms is greater than the length of the corresponding element of the other arm, and where the ratio of the lengths of the other two elements is, preferably, opposite.

10. Vehicle according to claim 9, **characterized by** the fact that the construction of the articulated arms (77, 78) of the second pair of wheels comprises at least two consecutive elements (77a, 77b, 78a, 78b) for each, where the relative proportions between the left and right arms are opposite to the left and right arms of the arms (71, 72) of the other pair of steering wheels (10).

11. Vehicle according to any claim from 7 to 10, **characterized by** the fact that the first rack (70) has a linear translation motion of a different extent from the other two racks (76, 77).

12. Vehicle according to any of claims 7 to 11, **characterized by** the fact that the racks are connected to transmit steering motion to each other.

13. Vehicle according to claim 12, **characterized by** the fact that the connection is made by a series of chains (80) and the reduction means (81), capable to reduce the translation of a rack with respect to another, preferably between two racks there are at least two chains (80a, 80b), in succession between each other and connected to each other by means of a sprocket pack (83), comprising a first sprocket (84) engaged with a chain and a second sprocket (85) engaged with the other, where the two sprockets are of different diameters between them.

14. Vehicle according to any of the previous claims, **characterised by** the fact that it is equipped with a motor connected to the drive wheel (15), which can be activated and deactivated on command.

15. Vehicle according to claim 15 when dependent on 5, **characterized by** the fact that the engine is configured to activate said drive wheel both forward and reverse, and where preferably there is a disengagement system (60) of said drive shaft (26) from said drive wheel (15), for example said disengagement system is **characterized by** the following:
- the drive shaft (26) comprises at least one sprocket (28a) connected by a chain (27a) to at least one corresponding sprocket (28b) integral with the drive wheel (15), and
- the disengagement system (60) comprises a shifting device (61) that moves said chain (27a) from engagement with one of said two sprockets (28a, 28b) to engagement with a smooth pulley 62, coaxial with said disengaged sprocket, wherein said pulley comprising a groove (63) within which said chain (27a) is free to slide without transmitting any motion.
